# EUROPÄISCHE PATENTANMELDUNG

(11) **EP 1 816 464 A1**
(43) Veröffentlichungstag der Anmeldung: **08.08.2007**
(21) Anmeldenummer: 07101316.3
(22) Anmeldetag: 29.01.2007
(51) Int. Cl.: G01N 21/39, G01N 21/09

(54) **Anordnung zur Konzentrationsessung für Abgaskomponenten im Abgasbereich einer Feuerungsanlage**

(30) Priorität: 01.02.2006 DE 102006004605
(71) Anmelder: SIEMENS AKTIENGESELLSCHAFT, 80333 München (DE)
(72) Erfinder: Strzoda, Rainer, 81825, München (DE)

(57) **Zusammenfassung**

Die Erfindung beschreibt eine Anordnung und ein Verfahren zur Konzentrationsmessung von Abgaskomponenten, insbesondere Sauerstoff, im Abgasbereich einer Feuerungsanlage mit:
- einer monochromen über Wellenlängenbereiche im Bereich der jeweiligen Molekülabsorptionsbande durchstimmbaren Lichtquelle (2,7), wobei ein Verfahren der TDLS anwendbar ist,
- einer Absorptionsmessstrecke, welche das Messgas beinhaltet,
- einem Lichtempfänger (3) zur Aufnahme von reflektiertem Licht, wobei ein einfach gefalteter Strahlengang in der Messanordnung vorliegt und eine diffus reflektierende Oberfläche vorhanden ist, wobei eine Messung bei Verschmutzung oder Kondensation an optischen Elementen mit einem eingeschränkten Dynamikbereich für die empfangene Lichtintensität durchführbar ist.

## Beschreibung

Die Erfindung betrifft eine monochrom über Wellenlängen durchstimmbares System, wie beispielsweise mit einer Laserdiode, einer Absorptionsstrecke, in der sich das zu untersuchende Gas befindet und einen Lichtempfänger, wie beispielsweise eine Photodiode. Zur Detektion wird die TDLS durchgeführt.

In vielen Bereichen der Technik stellt sich das Problem die Gaskonzentration einer oder mehrerer Komponenten kontinuierlich zu messen. Die Spektroskopie mit Laserdioden, engl. ,Tunable Diode Laser Spectroscopy' (TDLS), ist ein Verfahren, das auf Grund seiner herausragenden Eigenschaften wie z.B. der Selektivität und Langzeitstabilität für verschiedene von Anwendungen einsetzbar ist. Dieses optische Verfahren ist jedoch auf Transparenz entlang des Messweges durch das Messgasvolumen angewiesen. In vielen Anwendungen. z.B. im Abgastrakt von Fahrzeugen oder im Abgaskanal von Feuerungsanlagen ist diese Transparenz im Betrieb starken Schwankungen unterworfen.

Die TDLS wird bisher wegen der hohen Kosten, vor allem bedingt durch die Preise für die Laserdioden, nur in großtechnischen Anlagen, wie z.B. in Kraftwerken und Müllverbrennungsanlagen, eingesetzt. Die Verschmutzungsproblematik wird gelöst durch Spülen der Messzellenfenster mit einem geeigneten Gas.

Laserdioden für spektroskopische Anwendungen sind bisher Spezialanfertigungen mit geringer Stückzahl bei hohem technischem Produktionsaufwand. Daher erklären sich die hohen Kosten für die Laserdioden. Bei Laserdioden für die Sauerstoff-Konzentrationsmessung, speziell Vertikalemitter-Laserdioden (VCSEL), entwickelt sich die Preissituation so günstig, dass "Low Cost"-Anwendungen in greifbare Nähe rücken. Daher sind alternative Ansätze gefragt, die ohne zusätzlichen apparativen Aufwand und Hilfsmedien auskommen.

Kleinfeuerungsanlagen mit integrierter Sauerstoffkonzentrationsmessung sind bisher nicht bekannt. Zur Regelung solcher Anlagen werden vereinzelt Verfahren der Ionisationsstrommessung oder Metalloxid-Sensoren eingesetzt. Dabei werden aber keine Gaskonzentrationsmessungen vorgenommen, sondern nur eine Abweichung des Arbeitspunktes der Verbrennung in Richtung des fetten oder des mageren Bereichs erkannt.

Bei Feuerungsanlagen größerer Leistung werden oft Zirkonoxid-Sonden zur Messung der Sauerstoffkonzentration eingesetzt.

Aufgabe der Erfindung ist die Bereitstellung einer Messanordnung, die es erlaubt eine optische Absorptionsmessung mit Laserstrahlung im Abgasbereich von Feuerungsanlagen, insbesondere von Kleinfeuerungsanlagen, durchzuführen.

Die Lösung dieser Aufgabe geschieht durch die Merkmalskombination des Anspruchs 1. Vorteilhafte Ausgestaltungen sind den Unteransprüchen zu entnehmen.

Die Messanordnung umfasst ganz allgemein eine monochrom über Wellenlängen durchstimmbare Lichtquelle, wie beispielsweise eine Laserdiode, die Absorptionsstrecke, in der sich das zu untersuchende Gas befindet und einen Lichtempfänger, wie beispielsweise eine Photodiode. Zur Detektion wird die TDLS durchgeführt. Die Geometrie der Messanordnung erlaubt es Gaskonzentrationen mit der TDLS an Messorten zu erfassen, an denen mit Verschmutzung bzw. Kondensation von Flüssigkeiten an den Fenstern der Messzelle zu rechnen ist. Somit ist die bisher als notwendig betrachtete Transparenz im Strahlengang nur eingeschränkt vorhanden.

Die Charakteristika dieser Technologie sind auf Feuerungsanlagen angepasst, die im Abgastrakt aufgrund der dortigen thermodynamischen und strömungstechnischen Gegebenheiten dazu neigen, optische Messelemente oder Sicherheitsfenster mit Schmutz zu belegen oder auch Kondensate zu bilden. Kondensierende Abgase von Brennern, beispielsweise bei der Brennwerttechnik oder bei kleiner Brennerleistung für Privathaushalte zeigen meist diese Erscheinungen. Gemessen wird Sauerstoff, bzw. die Sauerstoff-Konzentration. Weiterhin können Gas- und Ölfeuerungsanlagen höherer Leistung bis in den MW-Bereich damit ausgestattet werden. Daneben ist die Technologie einsetzbar in der Abgasanlage von Fahrzeugen mit Verbrennungsmotor und dort, wo die Konzentrationen von Prozessgasen unter den beschriebenen Randbedingungen zu messen sind.

In der Anordnung kommt ein einfach gefalteter Strahlengang zur Anwendung, wobei die Reflexion an einer diffus reflektierenden Oberfläche erfolgt.

Durch diese Anordnung geht sehr viel Lichtintensität verloren, was bisher eine wie in dieser Anmeldung beschriebene Anordnung nicht favorisiert hat. Im Vergleich zu einem abbildenden System ändert sich jedoch die Intensität bei Kondensation von Feuchte bzw. Verschmutzung der Oberflächen in der Messanordnung bei dieser Ausbildung im Betrieb sehr viel weniger. Dies bedeutet, dass der Dynamikbereich des Systems stark eingeschränkt abläuft, was die technische Ausführung und den entsprechenden Aufwand entsprechend vereinfacht.

Eine äußerst positive Eigenschaft dieser Anordnung liegt in der geringeren Anfälligkeit der Konstruktion gegenüber optischen Interferenzen. Im Vergleich zu abbildenden Systemen mit der Abbildung des Laseraustrittsfensters auf den Detektor, führen spiegelnde Oberflächen, die annähernd senkrecht zum Strahlengang stehen, besonders solche in der Nähe der Lichtquelle oder des Empfängers, zu stehenden Wellen in der Messzelle, die als unerwünschte Modulation der Strahlung über der Wellenlänge auswirken. Dieses Phänomen tritt bei einer Vorrichtung oder einem Verfahren entsprechend dieser Erfindung nicht auf. Um dieser Interferenzen zu vermeiden war bisher eine genaue Justierung des Strahlengangs nötig, womit vermieden wird, dass Streulicht auf die Umgebung des Detektors trifft. Bei der beschriebenen Anordnung wird in dem einfach gefalteten Strahlengang diffus reflektiert, womit dieser Nachteil eliminiert ist. Es wird hier keine Abbildung angestrebt. Eine exakte Ausrichtung von Laserstrahl und Detektorposition ist nicht erforderlich, d.h. das System ist justierfrei.

Gegenüber herkömmlichen optischen Messsystemen für die Gaskonzentration im Abgas von Verbrennungsanlagen entfällt die notwendige Spülung der Messzellenfenster, was den Aufwand auf der Kostenseite und für die Technik erheblich reduziert.

Im Folgenden werden anhand der begleitenden Figuren Ausgestaltungen beschrieben, die besonders vorteilhaft sind:
- Figur 1: zeigt das Prinzip einer Messanordnung mit Lichtquelle, beispielsweise ein Laser, und Lichtempfänger auf einer Seite des Messgasraums,
- Figur 2: zeigt die Anordnung wie in Figur 1 mit dem Unterschied, dass als Reflektor die gegenüberliegende Wand verwendet wird,
- Figur 3: zeigt ein Element zur thermischen Isolation des Sendeelements von der Messkammer.

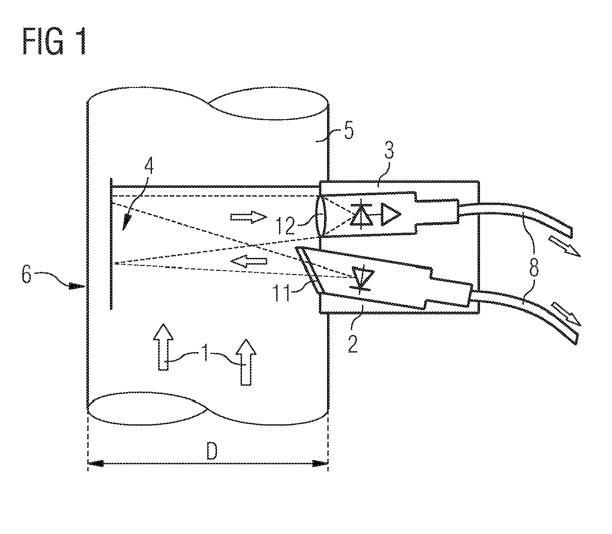

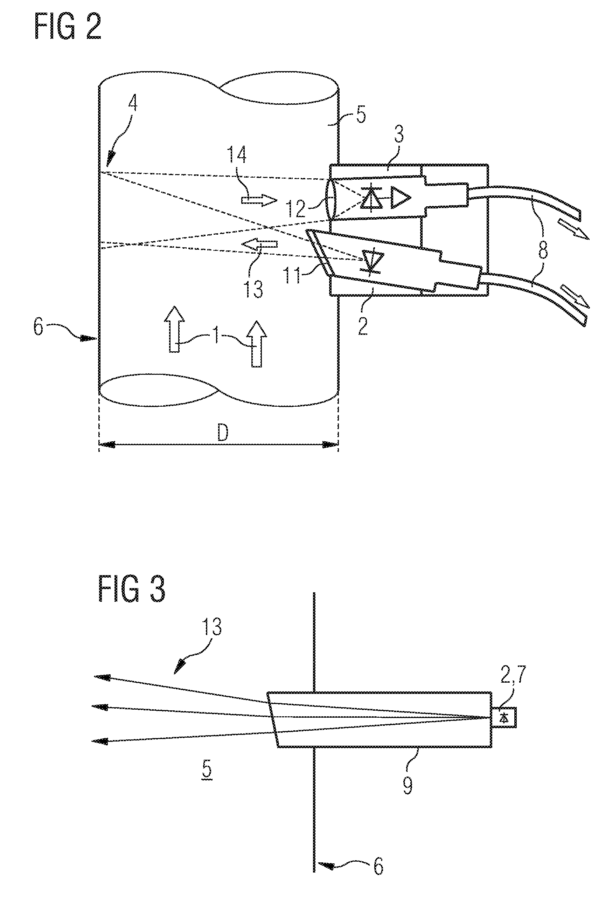

Die Figuren 1 und 2 zeigen zwei Ausführungsformen. Lichtquelle 2 und Detektor/Empfänger 3 sind als Einheit in die rechte Wand des Abgase 1 führenden Rohres mit dem Durchmesser D eingebaut. Der diffuse Reflektor 4 ist in der Figur 1 fest mit der Sende- und Empfangseinheit verbunden, wobei in der Figur 2 die gegenüberliegende Rohrwand als diffuser Reflektor 4 genutzt wird.

Die Reduktion der Dynamik des optischen Empfangs-Signals bei Betauung oder Verschmutzung der Messzelle ist eine wesentliche Eigenschaft der gewählten Anordnung. Beispielhalber sind in der Tabelle 1 die Dynamik einer Messzelle mit abbildender Optik und der Messzelle nach Figur 1. verglichen. Die Reduktion der Dynamik um mehr als eine Größenordnung vereinfacht den technischen Aufwand in der Signalaufbereitung und befördert so die Stabilität des Messsystems.

**Tabelle 1: Vergleich der Dynamik der optischen Signale am Fotoempfänger in verschiedenen Messsituationen.**

| Optische Ausgangs-Leistung einer Laserdiode z.B. 500 µW | Abbildendes System | Diffuse Reflexion |
|---|---|---|
| Leistung am Fotodetektor - ohne Betauung | 250 µW | 3 µW |
| - mit Betauung | < 1 µW | 0.3 µW |
| Dynamik | >100 | 10 |

Für heiße Abgase 1 mit beispielsweise Gastemperaturen über dem Betriebstemperaturbereich der Laserdiode 7 wird der Aufbau so ausgeführt, dass die Laserdiode 7 thermisch vom Abgas 1 isoliert ist. Dies geschieht über ein transparentes Element mit geringer Wärmeleitfähigkeit, beispielsweise mit einem transparenten Stab 9, beispielsweise aus Glas.

Die prinzipielle technische Ausführung dieses Isolierelementes geht aus Figur 3 hervor. Das Fenster der Messzelle/Messgasraum 5 vor dem Laser wird als Stab mit niedriger Wärmeleitfähigkeit ausgeführt. Als Material eignet sich vorteilhaft Glas. Damit wird es möglich den Laser im Bereich der Umgebungstemperatur zu betreiben. Ein analoger Aufbau ist auch für die Detektorseite möglich.

Gasheizungen, wie z.B. Brennwertgeräte werden häufig so ausgeführt, dass das Abgas und die Luftzufuhr in einem koaxialen Rohrsystem geführt werden. Damit ist es technisch sehr einfach möglich den Laseraufbau effektiv auf die Temperatur der Luftzufuhr zu kühlen.

Die vorgeschlagene Messanordnung ermöglicht erst die Messung von Gaskonzentrationen in der Abgassituation von Feuerungsanlagen, wie beispielsweise Kleinfeuerungsanlagen, Automobilabgas usw.

Damit wird mit der beschriebenen Anordnung eine stabile Messung von Gaskonzentrationen in einem weiten Bereich der Verschmutzung und der Kondensation erreicht.

Der gefaltete Strahlengang nutzt die zur Absorptionsmessung zur Verfügung stehende Strecke zweifach und steigert damit die Sensitivität.

Mit dem in Figur 1 skizzierten Aufbau ist die Einloch-Befestigung des gesamten Sensors möglich, was zu einer einfachen und somit kostengünstigen Montage führt.

In bestimmten Fällen ist es möglich die gegenüberliegende Rohrwand als Reflektor 4 zu nutzen.

Die Anordnung benötigt keine Feinjustierung, d.h. die normalen Fertigungstoleranzen reichen aus den Sensorbetrieb zu gewährleisten.

Das optische Verfahren entsprechend der Erfindung ermöglicht die Messung der mittleren Gaskonzentration über den Querschnitt des Abgasrohres 6 mit geringem Aufwand. Im Gegensatz zu extrahierenden Methoden, die punktuell Gas aus dem Strömungsprofil entnehmen müssen, wobei immer das Problem der Interpretation des Messergebnisses auftritt, da einzelne Stromfäden unterschiedliche Konzentrationen aufweisen können.

Figur 1 zeigt die prinzipielle Messanordnung. Lichtquelle 2 (z.B. Laser) und Lichtempfänger 3 sind auf einer Seite des Messgasraums 5 angeordnet. Das emittierte Licht passiert die Messstrecke und trifft auf den Reflektor 4. Der Anteil des reflektierten Lichts, der die Apertur des Empfängers trifft, wird zur Absorptionsmessung verwendet. In der skizzierten Anordnung bilden Sender, Empfänger und Reflektor eine Einheit, die komplett montiert, betriebsbereit eingebaut werden kann.

In Figur 2 ist eine Anordnung wie in Figur 1 mit dem Unterschied dargestellt, dass als Reflektor die gegenüberliegende Wand verwendet wird.

In Figur 3 zeigt eine Ausgestaltung zur thermischen Isolation des Sendeelements von der Messkammer bzw. dem Abgasbereich. Bei Abgastemperaturen oberhalb der maximalen Lasertemperatur kann das Licht von der Lichtquelle zu der Messzelle durch einen transparenten Stab aus einem Material mit möglichst niedriger thermischer Leitfähigkeit zugeführt werden. Damit kann die Temperatur am Ort des Sendeelements unter die max. Arbeitstemperatur der Laserdiode abgesenkt werden.

In den Figuren 1 bis 3 sind im Einzelnen weiterhin dargestellt:
Ein Abgasrohr 6, welches den Abgasbereich bzw. die Absorptionsstrecke bzw. den Messgasraum 5 abgrenzt weist eine einzige Öffnung auf, in der eine Anordnung zur Sauerstoffmessung eingebaut werden kann. Lichtquelle 2 und Empfänger 3 sind über Aufnahmevorrichtungen aufgenommen und mittels dieser am Abgasrohr 6 angebracht. Die Laserdiode 7 sendet aus dem optischen Sendeelement 11 Sendestrahlen 13 in den Messgasraum 5. Durch Reflexion am diffus reflektierenden Reflektor 4 werden Messstrahlen 14 generiert, die entsprechend der Apertur des optischen Empfangselementes 12 zum Empfänger 3 gelangen. Der Einsatz einer VCSEL Diode ermöglicht die Durchführung der TDLS. Die Möglichkeiten der TDLS werden hier nicht vollständig ausgenutzt, da lediglich ein Messsystem mit geringer Dynamik bedient werden muss. Anders betrachtet ergibt sich jedoch der enorme Vorteil, dass sich die Intensität innerhalb des Betriebsbereiches nur sehr wenig ändert, was wesentliche Vereinfachungen und Kosten günstige Ausführungen ermöglicht.

Die Sensorik ist über Kabel 8 mit einer Sensorelektronik verbunden.

## Patentansprüche

1. Anordnung zur Konzentrationsmessung von Abgaskomponenten im Abgasbereich einer Feuerungsanlage mit:
- einer monochromen über Wellenlängenbereiche im Bereich der jeweiligen Molekülabsorptionsbande durchstimmbaren Lichtquelle (2,7), wobei ein Verfahren der TDLS anwendbar ist,
- einer Absorptionsmessstrecke, welche das Messgas beinhaltet,
- einem Lichtempfänger (3) zur Aufnahme von reflektiertem Licht,
- wobei ein einfach gefalteter Strahlengang in der Messanordnung vorliegt und eine diffus reflektierende Oberfläche vorhanden ist,
- wobei eine Messung bei Verschmutzung oder Kondensation an optischen Elementen mit einem eingeschränkten Dynamikbereich für die empfangene Lichtintensität durchführbar ist.

2. Anordnung nach Anspruch 1, bei der als Abgaskomponente entweder Sauerstoff, Kohlenmonoxid, Kohlendioxid, Stickoxid, oder eine Kombination daraus messbar ist.

3. Anordnung nach Anspruch 1oder 2, bei der der Lichtempfänger mit einer Sammeloptik versehen ist.

4. Anordnung nach Anspruch 1, bei der der Lichtempfänger (3) eine Photodiode ist.

5. Anordnung nach einem der vorhergehenden Ansprüche, bei der als Reflektor eine den optischen Elementen gegenüberliegende Wand dient.

6. Anordnung nach einem der vorhergehenden Ansprüche, bei der die gesamte Sensoranordnung in einer einzigen Öffnung in einer Begrenzung des Messgasraumes (5) eingebaut ist.

7. Anordnung nach einem der vorhergehenden Ansprüche, bei der die Lichtquelle (2) thermisch vom Abgas (1) isoliert ist, indem ein transparentes Element mit geringer Wärmeleitfähigkeit zwischen Lichtquelle (2) oder Empfänger (3) und dem Messgasraum (5) zwischen gelegt ist.

8. Verfahren zur Konzentrationsmessung von Abgaskomponenten im Abgasbereich einer Feuerungsanlage mit folgenden Schritten:
- Durchleuchtung eines Abgasvolumens im Abgasbereich mittels einer Laserstrahlen aussendenden Lichtquelle (2),
- Reflektion von Beleuchtungsstrahlen an einem diffus reflektieren Reflektor (4),
- Doppelter Durchlauf von Lichtstahlen (13.14) durch das Messgasvolumen (5),
- Empfangen der reflektierten Strahlen als Messstrahlen,
- Konzentrationsmessung bei einer oder mehreren Abgaskomponenten mittels einer TDLS,
- wobei Messungen auch bei teilweiser Verschmutzung von optischen Elementen des Systems dank stark eingeschränktem Dynamikbereich des optischen Empfänger-Signals gewährleistet sind.

9. Verfahren zur Konzentrationsmessung von Abgaskomponenten nach Anspruch 8, bei dem entweder Sauerstoff, Kohlenmonoxid, Kohlendioxid, Stickoxid, oder eine Kombination daraus messbar ist.

10. Verfahren zur Konzentrationsmessung von Abgaskomponenten nach Anspruch 8, bei dem Sende- und/oder Empfangselemente zum Schutz vor Überhitzung durch optische Elemente entfernt vom heißen Abgasbereich positioniert werden.
